# EUROPEAN PATENT APPLICATION

(11) **EP 3 608 642 A1**
(43) Date of publication of application: **12.02.2020**
(21) Application number: 18188373.7
(22) Date of filing: 09.08.2018
(51) Int. Cl.: G01G 19/56, G01G 17/04

(54) **GAS CYLINDER SCALE**

(71) Applicant: van Heek, Sonja, 72213 Altensteig (DE)
(72) Inventor: van Heek, Matthias, 72213 Altensteig (DE)
(74) Representative: Meyer zu Bexten, Elmar

(57) **Abstract**

**Problem**

The object of the invention is to provide a universally applicable, inexpensive, and robust gas cylinder holder having an integrated mechanical level indicator.

**Solution**

Gas cylinder scale
characterized in
a measuring plate (3) for receiving a gas cylinder,
a baseplate (1) attached to the measuring plate (3),
a latching device (2) rotatably mounted within the baseplate (1),
a dial mechanically linked to the measuring plate (3), and
a scale proposal (4) arranged adjacent the dial.

## Description

### Technical Field

The invention relates to the product as per the first portion of Claim 1.

### Background Art

Weighing scales, weight scales, or weigh scales are devices to measure weight. More specifically, spring balances or spring scales measure the tension force of constraint acting on an object, opposing the local force of gravity, by reporting the distance that a spring deflects under a load. Rack and pinion mechanisms are sometimes used to convert the linear spring motion to a dial reading.

Commercial scales are usually calibrated so that measured force translates to mass at earth's gravity. Pertinent methods are laid out in detail in CABLE, Mike. Calibration: A Technician's Guide. Research Triangle Park: ISA - The International Society of Automation, 2005.

The prior art comprises processes and apparatus for weighing or otherwise measuring the remaining amount of gas in a pressurized gas cylinder. E. g., DE 7800263 U (ACHATZ BERNHARDT [DE]) 11.05.1978 discloses a mechanical gas cylinder scale, while a corresponding electronic is laid out in US 2007193379 A (MCCLUSKEY WILLIAM P [US]) 23.08.2007 .

### Summary of invention

The invention as claimed is hereinafter disclosed in such a way that the technical problem with which it deals can be appreciated and the solution can be understood.

### Technical Problem

The object of the invention is to provide a universally applicable, inexpensive, and robust gas cylinder holder having an integrated mechanical level indicator.

### Solution to Problem

The problem is solved as per the characterizing portion of Claim 1.

### Advantageous effect of invention

The invention allows for a precise level indication while providing long-term reliability and ease of maintenance. In contrast to known level indicators, the invention requires neither external power supply nor sensitive electronic components for weight determination.

In a preferred embodiment, a position on the scale may be "bookmarked" to derive a consumption forecast. The user may further benefit from an easily attachable scale sticker as well as from an adjustable scale clip giving a graphical representation or mass or percentage reading of the gas amount remaining. An integrated taring system, which may be locked for protection and added stability while in transit, ensures the accuracy of the weigh scale.

### Brief description of drawings

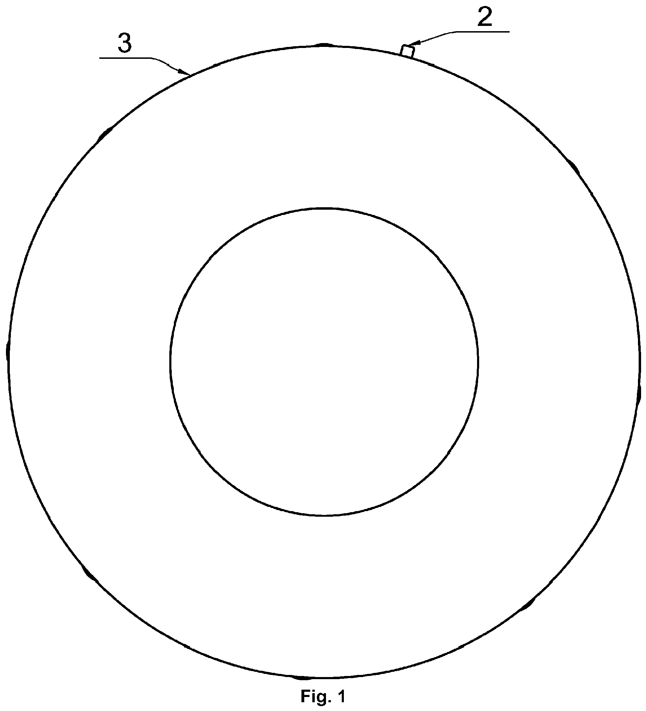

Figure 1 is a top view of a gas cylinder scale.

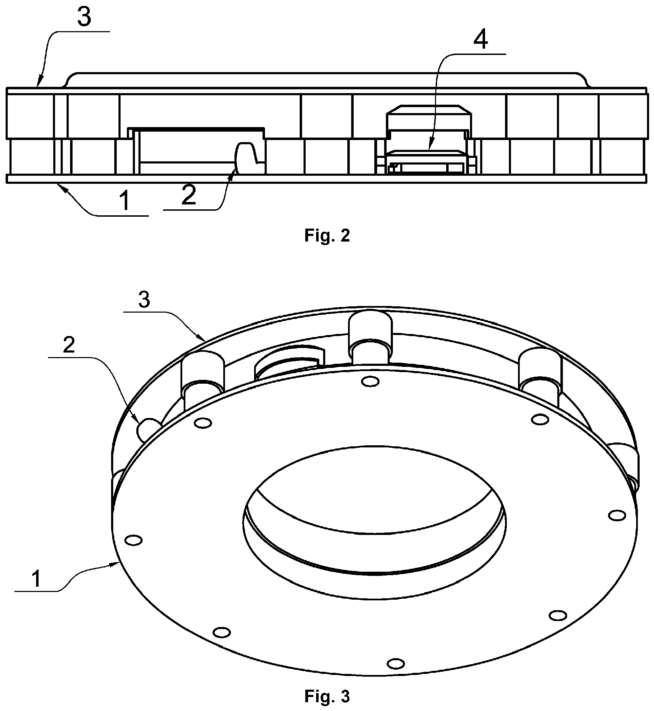

Figure 2 is a side view of the scale.
Figure 3 is a perspective view of the scale.

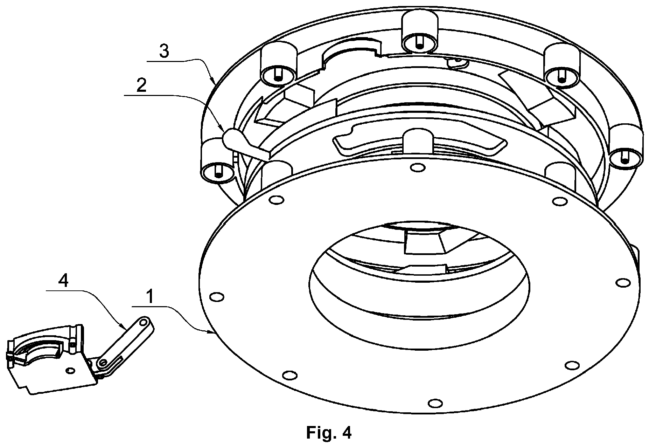

Figure 4 is an exploded view of the scale.

### Description of embodiments

The figures depict a gas cylinder scale having a measuring plate (3) for receiving a gas cylinder, a baseplate (1) attached to the measuring plate (3), a latching device (2) rotatably mounted within the baseplate (1), a dial mechanically linked to the measuring plate (3), and a scale proposal (4) arranged adjacent the dial.

### Industrial applicability

The invention is applicable, among others, throughout the camping and leisure industries.

### Reference signs list

1 Baseplate
2 Latching device
3 Measuring plate
4 Scale proposal

### Citation list

The following documents are cited hereinbefore.

### Patent literature

DE 7800263 U (ACHATZ BERNHARDT [DE]) 11.05.1978
US 2007193379 A (MCCLUSKEY WILLIAM P [US]) 23.08.2007

### Non-patent literature

CABLE, Mike. Calibration: A Technician's Guide. Research Triangle Park: ISA - The International Society of Automation, 2005.

## Claims

1. Gas cylinder scale
**characterized in**
a measuring plate (3) for receiving a gas cylinder,
a baseplate (1) attached to the measuring plate (3),
a latching device (2) rotatably mounted within the baseplate (1),
a dial mechanically linked to the measuring plate (3), and
a scale proposal (4) arranged adjacent the dial.
